# EUROPEAN PATENT SPECIFICATION

(11) **EP 2 057 232 B1**
(45) Date of publication and mention of the grant of the patent: **09.02.2011**
(21) Application number: 07841093.3
(22) Date of filing: 20.08.2007
(51) Int. Cl.: C08L 71/00

(54) **AQUEOUS COMPOSITIONS**
WÄSSRIGE ZUSAMMENSETZUNGEN
COMPOSITIONS AQUEUSES CONTENANT DES PRINCIPES ACTIFS HYDROPHILES PROTÉGÉS

(30) Priority: 23.08.2006 US 839629 P
(43) Date of publication of application: 13.05.2009
(73) Proprietor: DOW GLOBAL TECHNOLOGIES INC., Midland, MI 48674 (US)
(72) Inventor: HARRIS, J., Keith, Midland, MI 48640 (US); ZHANG, Xiaodong, Livingston, NJ 07039 (US); JORDAN, Susan, L., Doylestown, PA 18902 (US); ROSE, Gene, D., Minnesota 56308 (US); GARCIA, Joaquin, M., East Brunswick, NJ 08816 (US)
(74) Representative: Raynor, John
(86) International application number: PCT/US2007/076292
(87) International publication number: WO 2008/024703

(56) References cited:
- WO-A-2007/045612
- DE-A1- 19 949 091
- US-A1- 2003 073 760

## Description

### Field

The present invention relates to aqueous compositions comprising hydrophilic actives.

### Background

For ecological and economic reasons, water is often preferred over organic solvents as a liquid diluent for active compounds. Stable aqueous compositions comprising actives are used in many different technology areas, including the pharmaceutical, agricultural, cosmetic, detergent, and paint industries. For producing stable aqueous compositions comprising lipophilic actives, adjuvants, such as surfactants, are added.

In contrast, hydrophilic actives typically are simply dissolved in water. However, this method is sometimes problematic. For example, some aqueous compositions containing actives comprise of a large number of ingredients. If hydrophilic actives show lack of stability, there is a tendency of overdosing them to compensate for the stability loss. In other cases, hydrophilic actives dissolved in aqueous compositions may be released to the environment more quickly than desirable. In either scenario (faster release than desired or overdosing), the active may present a variety of problems, such as skin irritation by actives in personal care compositions. Similarly, undesirable interactions, also known as lack of compatibility, between hydrophilic actives and other components may reduce the efficacy of the active.

Accordingly, it would be desirable to achieve one or more of the following: increased stability of hydrophilic actives in aqueous solutions, reduced impact on substrates to which aqueous compositions comprising the hydrophilic actives are applied, such as skin, controlled release of the hydrophilic actives to the environment, or increased compatibility with other components in aqueous compositions.

### Summary

In one embodiment, the present invention provides compositions, comprising more than 50 weight percent water as the liquid diluent, a hydrophilic active, and a diblock copolymer comprising one block of polymerized ethylene oxide and one block of a polymerized butylene oxide, wherein 30 to 95 percent of the hydrophilic active that is present in the aqueous composition is encapsulated by the diblock copolymer.

The hydrophilic active is a component having activity as a personal care agent, a pharmaceutical agent, a detergent related agent, a cleaning agent, an agricultural agent, an indicator or a catalyst.

The present invention also provides processes for preparing the above aqueous compositions.

### Detailed Description

The present invention provides a composition comprising more than 50 weight percent water as the liquid diluent (i.e., an aqueous composition), a hydrophilic active, and a block copolymer comprising at least one block of polymerized ethylene oxide and at least one block of a polymerized butylene oxide.

The aqueous composition comprises water as the main liquid diluent, i.e., water amounts to more than 50 percent, preferably at least 70 percent, more preferably at least 90 percent of the total weight of the liquid diluent. In one embodiment, the water is present in a range from about 50 to about 99.5 weight percent, preferably from about 60 to about 98 weight percent, and more preferably from about 65 to about 95 weight percent. The aqueous composition can also comprise one or more organic diluents such as ethyl alcohol, isopropyl alcohol, higher alcohols or propylene glycol, but preferably, water is the only liquid diluent.

The term "hydrophilic active" as used herein means that the compound is useful in a given aqueous composition for a given end-use, as will be explained, and is soluble at an amount at which the compound is typically used. Preferably, the active's solubility in water is at least 0.1 grams, preferably at least 0.5 grams, more preferably at least 2 grams, most preferably at least 5 grams, in 100 grams of distilled water at 25 °C and I atmosphere. It should be noted that unlike the case with a lipophilic active, the block copolymer is not acting as a solubilizer to increase the amount of hydrophilic active which can be incorporated in the aqueous composition. The hydrophilic active is already soluble in the aqueous composition as described above.

The compositions of the present invention may comprise a wide variety of liquid or solid hydrophilic actives. The hydrophilic actives may be nonionic or ionic. The hydrophilic active may be polymeric, but is preferably monomeric.

In some embodiments, the compositions of the present invention are personal care compositions. Examples of personal care compositions include hair care, skin care, or mouth care compositions, for example shampoos, conditioners, bleaching compositions, coloring compositions, lotions for skin care, dentifrices, mouth rinses or whitening agents, the hydrophilic actives are, for example, water-soluble anti-inflammatory agents, antibacterial agents, antifungal agents, antiviral agents, anti-seborrhoeic agents, antiacne agents, keratolytic agents, antihistamines, anesthetics, cicatrizing agents, pigmentation modifiers, tanning accelerators, artificial tanning agents, refreshing agents, anti-aging agents, vascular protectors, insect repellants, deodorants, antidandruff agents, agents for preventing hair loss, cleansing agents, fragrances, sunscreens, antioxidants, free-radical scavengers, extracts from plants or algae or man-made components of extracts from plants or algae, water-soluble proteins, protein hydrolyzates, peptides, alpha-hydroxy acids, emollients, moisturizers, such as the sodium salt ofpyroglutamic acid, peeling agents, such as glycolic acid, and vitamins. Specific hydrophilic actives which are known compounds of personal care compositions are for example acids, such as salicylic acid, glycolic acid, citric acid, or hyaluronic acid; salts, such as sodium chloride, caffeine derivatives, moisturizers, such as the sodium salt of pyroglutamic acid, glycerol, glycerol derivatives, skin whitening agents, such as dihydroxyacetone, antioxidants such as Vitamin C or sunscreen agents such as benzophenone-4.

In some embodiments, the compositions of the present invention are pharmaceutical compositions. Pharmaceutical compositions include those for therapeutic, diagnostic, or preventive use, such as small molecules, peptides, proteins, antibodies, vitamins, herbals, and mineral supplements. Pharmaceutical compositions include veterinary and medical uses for human beings. The hydrophilic actives include water-soluble therapeutic agents, diagnostic agents, vaccines, vitamins, herbals and mineral supplements or known adjuvants in pharmaceutical compositions. Specific hydrophilic actives which can be included in pharmaceutical compositions are for example vitamins, such as vitamin C.

In some embodiments, the compositions of the present invention are liquid detergent compositions wherein the active is a detergent, fabric softener, soil redeposition agent, or other conventional detergent ingredient.

In some embodiments, the compositions of the present invention are household products such as air fresheners, wipes, or cleaning solutions.

In some embodiments, the compositions of the present invention are agricultural compositions, for example, to allow a controlled release of an agriculturally beneficial hydrophilic active to the environment.

In some embodiments, the compositions of the present invention are pharmaceutical compositions, for example, to protect labile actives.

In some embodiments, the compositions of the present invention are used as an indicator. For example, a hydrophilic dye or pigment active is encapsulated by the block copolymer, and when the temperature of the composition is raised above the stability temperature of the block copolymer, a color change occurs. Alternatively, the incorporated active could be one half of a red-ox pair or a catalyst, such that the composition remains static until heated above a certain temperature, when the active is released.

The amount of the hydrophilic active in the aqueous composition can vary in a wide range and mainly depends on the desired end-use of the aqueous composition and can be chosen independently of the block copolymer. The hydrophilic active is included in the aqueous composition at an amount that is not higher than its solubility limit in the absence of the block copolymer.

The block copolymer comprises one block of polymerized ethylene oxide ("EO") and one block of a polymerized butylene oxide.

The most preferred alkylene oxide is 1,2-butylene oxide, which is designated hereafter as "butylene oxide" or "BO."

The block copolymer is preferably produced by anionic polymerization.

The block copolymer comprises one block of polymerized ethylene oxide and one block of a polymerized butylene oxide.

It is beneficial that the EO blocks be terminated with a hydroxyl unit.

The block copolymer comprises at least one block of ethylene oxide and at least one block of butylene oxide. Thereof, block copolymers comprising 10 to 12 units of polymerized ethylene oxide and 10 to 12 units of polymerized butylene oxide are particularly preferred.

The weight average molecular weight of the polymerized ethylene oxide block generally is from about 100 to about 2200. preferably from about 100 to about 970. more preferably from about 200 to about 900. and most preferably from about 500 to about 800.

The block of a polymerized butylene oxide generally has a weight average molecular weight of from about 300 to about 3600. preferably from about 300 to about 1600, more preferably from about 500 to about 1500, and most preferably from about 700 to about 1300.

The total weight average molecular weight of the block copolymer is preferably less than 5800, more preferably less than 2400, most preferably less than 2000.

Block copolymers comprising at least one block of polymerized ethylene oxide and at least one block of a polymerized alkylene oxide comprising at least 4 carbon atoms and methods of producing them are known in the art. For example, U.S. Patent No. 5,587,143, the entirety of which is incorporated herein by reference, discloses butylene oxide-ethylene oxide block copolymers. Likewise, J. Keith Harris et al., "Spontaneous Generation of Multilamellar Vescicles from Ethylene Oxide/Butylene Oxide Diblock Copolymers", Langmuir 2002, 18, 5337-5342, the entirety of which is incorporated herein by reference, discusses the behavior of ethylene oxide/butylene oxide diblock copolymers in aqueous solutions.

The aqueous composition of the present invention preferably comprises from about 0.1 to about 20 weight percent, more preferably from about 0.5 to about 5 weight percent of the block copolymer, based on the total weight of the composition. The weight ratio between the encapsulated hydrophilic active and the block copolymer is preferably from about 0.1 to about 1000 : 1, more preferably from about 1 to about 100 : 1.

It has been found that the resulting aqueous composition is generally stable over a period of at least 1 week, in most cases even over a period of at least 1 month, and, in the preferred embodiments of the present invention, even over a period of at least 3 months.

While not wishing to be bound by theory, it is contemplated that the block copolymer is useful for encapsulating the hydrophilic active, thus rendering the encapsulated hydrophilic active more stable. It is believed that unilamellar or multi-lamellar vesicles are formed by the block copolymer. These substantially stable vesicles, composed predominantly, by mass, of the block copolymer, self-assemble in water or aqueous solutions. If the aqueous composition comprises an excess of block copolymer, generally from 30 to 95 percent, then typically from 40 to 50 percent of the amount of the hydrophilic active that is present in the aqueous composition is encapsulated. Encapsulation has one or more of the following advantages: increased stability of the hydrophilic active in the aqueous solution, increased compatibility of the hydrophilic active with other components in the aqueous composition, reduced impact on substrates to which the aqueous composition comprising the hydrophilic active is applied, such as skin, and/or controlled release of the hydrophilic active to the environment.

The capsules comprising a hydrophilic active encapsulated in the above-described block copolymer generally have a diameter of from about 0.05 to about 50 micrometers. The particle size of the capsules can be influenced by ultrasonic treatment or other known procedures if desirable.

The present invention contemplates additional components to the compositions. For example, encapsulation efficiency can be further improved by adding additional water-soluble ingredients to the external aqueous phase of the aqueous composition after encapsulation of the hydrophilic active in the block copolymer. For example, it has been found that adding a propylene glycol to the aqueous composition improves the encapsulation efficiency. Adding mineral oil also provides improved stability of vesicles and improved encapsulation efficiency.

Similarly, depending on the intended use, the composition of the present invention may comprise a variety of other components known in the art.

In one embodiment, a preferred application of the present invention is the stabilization of water-soluble compounds in aqueous formulations, for example stabilization against oxidation. For example, it has been found that vitamin C can be stabilized in aqueous personal care compositions by encapsulating it in the above-described block copolymer. It has also been found that dihydroxyacetone, a skin whitening agent which is used in personal care compositions, can be stabilized in aqueous compositions by encapsulating it in the above-described block copolymer.

In another embodiment, the present invention improves the compatibility of two compounds in an aqueous formulation, of which at least one is a hydrophilic active. The compatibility of the two compounds can be improved by encapsulating the hydrophilic active in the above-described block copolymer. For example, CARBOPOL^{™} polymers are cross-linked polymers of acrylic acid which are commonly used as thickeners for lotions. It is well known that their thickening property will be drastically reduced when a salt, such as sodium-2-pyrrolidone carboxylate, is introduced into the lotion. Sodium-2-pyrrolidone carboxylate is a commonly used moisturizer for hair and skin care products. By encapsulating the sodium-2-pyrrolidone carboxylate in the above-described block copolymer, the viscosity of the lotion can be maintained to a substantial extent, as will be shown below.

Aqueous compositions of the present invention can be produced in a process which comprises the step of blending a hydrophilic active with an above-mentioned block copolymer in an aqueous diluent. All blending types are contemplated, but gentle agitation is generally sufficient to generate closed structures of the above-mentioned block copolymer which encapsulate a hydrophilic active. The blending temperature can vary over a wide range, including room temperature for convenience.

### Examples

The following examples are for illustrative purposes only and are not intended to limit the scope of the present invention. All percentages are by weight unless otherwise specified.

### Example 1

Encapsulation of a water soluble compound in solution can be determined by the following protocol. A water-soluble fluorescent dye Eosin Y is dissolved in distilled water to prepare a 0.035 weight percent solution. About 10 g of this solution is added to 0.2 g of a diblock copolymer of about 11 units of polymerized ethylene oxide and about 11 units of polymerized butylene oxide, designated as EO₁₁BO₁₁. The solution and EO₁₁BO₁₁ block copolymer are agitated.

Examination by plane-polymerized light can detect the formation of multi-lamellar vesicles, which in this protocol would encapsulate a portion of the dye solution. To remove the residual dye in the aqueous phase, the dispersion is mixed with cationic exchange resin. Reexamination of the sample using plane-polymerized light will confirm that the multi-lamellar vesicles are still intact. Finally the multi-lamellar vesicles are disintegrated using tetrahydrofuran to form a clear solution with a definite pink cast confirming that the now released dye was present in the multi-lamellar vesicles during the exchange resin step.

### Example 2

Encapsulation of a water soluble compound in a lotion can be determined by the following protocol.

A lotion formulation is provided comprising:
100 ppm of vitamin C encapsulated in 1 weight percent of block copolymer EO₁₁BO₁₁;
0.5 weight percent of the emulsifier GLUCAMATE^{™} SS methyl glucoside derivative (CFTA/INCI designation methyl glucose sesquistearate);
1.5 weight percent of the emulsifier GLUCAMATE^{™} SSE-20 methyl glucoside derivative (CFTA/INCI designation PEG-20 methyl glucose sesquistearate);
4 weight percent of mineral oil;
0.2 weight percent of the thickening agent Carbomer 940, which is commercially available from Noveon under the trademark CARBOPOL^{™} 940;
0.3 weight percent of triethanolamine; and
the remainder being water.

Using a cross-polarized microscope, if a Maltese Cross pattern is observed, the formation of vesicles by the block copolymer is indicated.

Substantially following the above protocol, a Maltese Cross pattern was observed.

### Example 3

Encapsulation of yet another water soluble compound in a solution can be determined by the following protocol. Dihydroxyacetone (also known as DHA) is primarily used as an ingredient in sunless tanning products. Reaction of L-lysine with dihydroxyacetone results in a dark brownish color. This color change is used as an indicator in the protocol.

An aqueous composition comprising 0.2 weight percent dihydroxyacetone is prepared. 1 weight percent, based on water, of EO₁₁BO₁₁ block copolymer is added and the composition is shaken. The composition is filtered through a MWCO dialysis bag (Spectrum Laboratory, Rancho Dominguez, CA) to remove any non-encapsulated dihydroxyacetone by filtration.

24 weight percent of L-lysine is added to a first sample of the filtered composition, based on the total weight of the sample. If the dihydroxyacetone is encapsulated in the block copolymer, no appreciable color change to brown will occur.

9 weight percent of L-lysine and 11 weight percent of ethanol are added to a second sample of the filtered composition, based on the total weight of the sample. The ethanol has the effect that the EO₁₁BO₁₁ block copolymer vesicles are destroyed. Appearance of a brownish color shows that dihydroxyacetone had been encapsulated in the EO₁₁BO₁₁ block copolymer vesicles and is now released upon destruction of the vesicles.

Substantially following the above protocol, it was observed that dihydroxyacetone is encapsulated in block copolymers comprising a block of polymerized ethylene oxide and a block of polymerized butylene oxide. 2 hours after addition of L-lysine to the first filtered composition, the composition remained colorless. 2 hours after addition of L-lysine to the second filtered composition, the composition developed a brownish color which shows that dihydroxyacetone had been encapsulated in the EO₁₁BO₁₁ block copolymer vesicles.

### Example 4

Encapsulation efficiency in solution can be determined by the following protocol. Aqueous compositions comprising LOWACENE Red-80 dye encapsulated in EO₁₁BO₁₁ vesicles are prepared by blending water with 50 ppm of Red-80 dye and I weight percent of EO₁₁BO₁₁, based on the weight of water. LOWACENE Red-80 dye is an organic water-soluble salt. Degree of encapsulation can be measured as a function of electro-conductivity in the solution. The electro-conductivity of the LOWACENE Red-80 dye is calibrated to render a quantitative value correlating percent of dye encapsulated and conductivity. When the LOWACENE Red-80 dye is encapsulated in block copolymer vesicles, the conductivity will decrease. From the reduction in conductivity measurement, the encapsulation efficiency of block copolymer vesicles can be calculated.

Substantially following the above protocol, the following results were obtained and are reported in TABLE 1.

**TABLE 1**

| **Sample** | **Ingredients of composition, in addition to water** | **Encapsulation Efficiency (%)** |
|---|---|---|
| 1 | 50 ppm LOWACENE Red-80 dye | 0 |
| 2 | 50 ppm LOWACENE Red-80 dye and 1 weight % of EO₁₁BO₁₁ | 37 |
| 3 | 50 ppm LOWACENE Red-80 dye and 1 weight % of EO₁₁BO₁₁ followed by 0.5 percent of propylene glycol | 70 |
| 4 | 50 ppm LOWACENE Red-80 dye and I weight % of EO₁₁BO₁₁ followed by 0.5 percent of mineral oil | 65 |

For Sample 2, the encapsulation efficiency was 37 percent, i.e., 37 percent of the total amount of LOWACENE Red-80 dye in the aqueous composition was encapsulated. The encapsulation efficiency increased to 70 percent by adding 0.5 percent of propylene glycol to the aqueous composition comprising Red-80 dye encapsulated in EO₁₁BO₁₁ in Sample 3. Similarly, the encapsulation efficiency increased to 65 percent by adding 0.5 percent of mineral oil to the aqueous composition comprising Red-80 dye encapsulated in EO₁₁BO₁₁.

### Example 5

Oxidation of a water soluble compound in solution can be determined by the following protocol. Three aqueous compositions comprising 100 ppm ofL-ascorbic acid (vitamin C) are prepared. To prepare the first composition, 100 ppm of vitamin C is dissolved in water. To prepare the second composition, 1 weight percent of EO₁₁BO₁₁ block copolymer based on the weight of water is agitated in water to form vesicles. After vesicle formation, 100 ppm of vitamin C is added to the composition, thus, the vitamin C is not encapsulated in the EO₁₁BO₁₁ block copolymer. To prepare the third composition, 100 ppm of vitamin C is dissolved in water, 1 weight percent of EO₁₁BO₁₁ block copolymer based on the weight of water is added, and the composition is agitated to form EO₁₁BO₁₁ block copolymer vesicles encapsulating vitamin C. The three compositions are placed into an oven at 50°C for one month to determine the resistance of the vitamin C against oxidation. If vitamin C is oxidized, dehydroxyascorbic acid is formed which absorbs UV light at 350 nm. Vitamin C itself does not absorb UV light at 350 nm. Based on the degree of UV light absorption, the percentage of oxidized vitamin C can be determined.

Substantially following the above protocol, the following results were obtained and are reported in TABLE 2.

**TABLE 2**

| **Sample** | **Ingredients of composition, in addition to water** | **% oxidized vitamin C** |
|---|---|---|
| 5 | 100 ppm vitamin C | 65 |
| 6 | 100 ppm vitamin C and 1 wt.% EO₁₁BO₁₁ block copolymer, not encapsulated | 43 |
| 7 | 100 ppm vitamin C encapsulated with 1 wt.% EO₁₁BO₁₁ block copolymer | 19 |

The percentages of oxidized vitamin C, based on the total weight of vitamin C, for each of the three compositions show that encapsulated vitamin C, designated Sample 7, experienced significantly less oxidation than the other samples listed in Table 2.

### Example 6

Salt induced loss of viscosity of a water soluble compound in a cross-linked thickener in water can be determined by the following protocol. Three compositions: 1) 0. 5 wt. % CARBOPOL™ 2020 neutralized and the remainder water, 2) 0. 5 wt. % CARBOPOL™ 2020 neutralized, 0.1 wt.% Sodium PCA, and the remainder water, and 3) 0.5 wt. % CARBOPOL™ 2020 neutralized with 0.1 wt.% Sodium PCA and 1 wt.% EO₁₁BO₁₁ block copolymer, and the remainder water, are created. All percentages are based on the weight of water. The viscosity of each composition is measured at a temperature of 24°C using a Brookfield LV viscometer.

CARBOPOL™ polymers are cross-linked polymers of acrylic acid which are commonly used as thickeners for lotions. It is well known that the thickening property will drastically reduce when a salt is introduced into the lotion formulation. Sodium-2-pyrrolidone carboxylate (Sodium PCA) salt is a commonly used moisturizer for hair and skin care products.

Substantially following the above protocol, the following results were obtained and are reported in TABLE 3.

**TABLE 3**

| **Sample** | **Ingredients of composition, in addition to water** | **Viscosity (mPa.s)** |
|---|---|---|
| 8 | 0. 5 wt. % CARBOPOL™ 2020 neutralized | 39151 |
| 9 | 0.5 wt. % CARBOPOL™ 2020 neutralized and 0.1 wt.% Sodium PCA | 14328 |
| 10 | 0.5 wt. % CARBOPOL™ 2020 neutralized, 0.1 wt.% Sodium PCA and 1 wt.% EO₁₁BO₁₁ block copolymer | 37650 |

As shown in TABLE 3, by encapsulating the sodium-2-pyrrolidone carboxylate in the block copolymer EO₁₁BO₁₁, the viscosity of the formulation designated sample 10 can be maintained to a substantial degree as compared to the salt free sample 8.

### Example 7

The skin irritation of an aqueous composition comprising 5 weight percent of glycolic acid in the absence or presence of 1 weight percent of the block copolymer EO₁₁BO₁₁, can be determined by the following protocol.

The solution is applied onto the dorsal part of the forearm of 10 panelists, spread evenly in a 3 inch area and left on the arm for about 10 minutes. On one arm an aqueous solution A) comprising 5 weight percent of glycolic acid is applied, on the other arm an aqueous solution B) comprising 5 weight percent of glycolic acid and 1 weight percent of the block copolymer EO₁₁BO₁₁ is applied, without disclosing the composition of the solutions to the panelists. Then the panelists are asked to identify which arm feels more irritated, by asking which arm feels less burning sensation.

Substantially following the above protocol, the following results were obtained. All panelists indicated that the arm to which solution B) has been applied felt less burning sensation. Thus, encapsulation of 5 weight percent of glycolic acid appears to lessen any skin irritation effects.

It is understood that the present invention is not limited to the embodiments specifically disclosed and exemplified herein. Various modifications of the invention will be apparent to those skilled in the art. Such changes and modifications may be made without departing from the scope of the appended claims.

Moreover, each recited range includes all combinations and subcombinations of ranges, as well as specific numerals contained therein. Additionally, the disclosures of each patent, patent application, and publication cited or described in this document are hereby incorporated herein by reference, in their entireties.

## Claims

1. A composition, comprising:
more than 50 weight percent water as the liquid diluent,
a hydrophilic active wherein the hydrophilic active is a component having activity as a personal care agent, a pharmaceutical agent, a detergent-related agent, a cleaning agent, an agricultural agent, an indicator, or a catalyst, and
a diblock copolymer comprising one block of polymerized ethylene oxide and one block of a polymerized butylene oxide
wherein 30 to 95 percent of the amount of the hydrophilic active that is present in the aqueous composition is encapsulated by the diblock copolymer.

2. The composition of claim 1, wherein the block copolymer comprises 10 to 12 units of polymerized ethylene oxide and 10 to 12 units of polymerized butylene oxide.

3. The composition of claim 1, further comprising at least one of a propylene glycol or a mineral oil added after the active and block copolymer have been combined.

4. The composition of claim 1, wherein the hydrophilic active is a vitamin, a salt, or an acid.

5. The composition of claim 1, wherein the solubility of the hydrophilic active in water is at least 0.1 grams in 100 grams of distilled water at 25°C and 1 atmosphere.

6. The composition of claim 1, wherein the solubility of the hydrophilic active in water is at least 2 grams in 100 grams of distilled water at 25°C and 1 atmosphere.

7. The composition of claim 1, wherein the weight ratio between the hydrophilic active and the block copolymer is from about 0.1 to about 1000 : 1.

8. The composition of claim 1, wherein the weight ratio between the hydrophilic active and the block copolymer is from about 1 to about 100 : 1.

9. The composition of claim 1, wherein the composition comprises from about 0.5 to about 5 weight percent of the block copolymer, based on the total weight of the composition.

10. The composition of claim 1, wherein the weight average molecular weight of the block copolymer is less than 2000.

11. The composition of claim 1, wherein the weight average molecular weight of the block of polymerized ethylene oxide is from 200 to 900.

12. The composition of claim 1, wherein the water is substantially the only liquid diluent in the composition.

13. The composition of claim 1, wherein the water is present in a range from about 50 to about 99.5 weight percent.

14. A process for preparing the aqueous composition of claim 1, comprising:
blending the hydrophilic active with the block copolymer in an aqueous diluent.

## Patentansprüche

1. Zusammensetzung, umfassend:
mehr als 50 Gewichtsprozent Wasser als das flüssige Verdünnungsmittel,
einen hydrophilen Wirkstoff, wobei der hydrophile Wirkstoff eine Komponente ist, die Aktivität als ein Körperpflegemittel, ein pharmazeutisches Mittel, ein Detergenz-verwandtes Mittel, ein Reinigungsmittel, ein Landwirtschaftsmittel, ein Indikator oder ein Katalysator hat, und
ein Diblock-Copolymer umfassend einen Block von polymerisiertem Ethylenoxid und einen Block eines polymerisierten Butylenoxids,
wobei 30 bis 95 Prozent der Menge des hydrophilen Wirkstoffs, der in der wässrigen Zusammensetzung vorliegt, durch das Diblock-Copolymer eingekapselt ist.

2. Zusammensetzung nach Anspruch 1, wobei das Block-Copolymer 10 bis 12 Einheiten des polymerisierten Ethylenoxids und 10 bis 12 Einheiten des polymerisierten Butylenoxids umfasst.

3. Zusammensetzung nach Anspruch 1, weiterhin umfassend mindestens eines von einem Propylenglycol oder einem Mineralöl, das, nachdem der Wirkstoff und das Block-Copolymer kombiniert wurden, zugegeben wird.

4. Zusammensetzung nach Anspruch 1, wobei der hydrophile Wirkstoff ein Vitamin, ein Salz oder eine Säure ist.

5. Zusammensetzung nach Anspruch 1, wobei die Löslichkeit des hydrophilen Wirkstoffs in Wasser mindestens 0,1 Gramm in 100 Gramm destilliertem Wasser bei 25 °C und 1 Atmosphäre ist.

6. Zusammensetzung nach Anspruch 1, wobei die Löslichkeit des hydrophilen Wirkstoffs in Wasser mindestens 2 Gramm in 100 Gramm destilliertem Wasser bei 25 °C und 1 Atmosphäre ist.

7. Zusammensetzung nach Anspruch 1 , wobei das Gewichtsverhältnis zwischen dem hydrophilen Wirkstoff und dem Block-Copolymer von etwa 0,1 bis etwa 1000 : 1 ist.

8. Zusammensetzung nach Anspruch 1, wobei das Gewichtsverhältnis zwischen dem hydrophilen Wirkstoff und dem Block-Copolymer von etwa 1 bis etwa 100 : 1 ist.

9. Zusammensetzung nach Anspruch 1, wobei die Zusammensetzung von etwa 0,5 bis etwa 5 Gewichtsprozent des Block-Copolymers, basierend auf dem Gesamtgewicht der Zusammensetzung umfasst.

10. Zusammensetzung nach Anspruch 1, wobei das gewichtsmittlere Molekulargewicht des Block-Copolymers weniger als 2000 ist.

11. Zusammensetzung nach Anspruch 1, wobei das gewichtsmittlere Molekulargewicht des Blocks von polymerisiertem Ethylenoxid von 200 bis 900 ist.

12. Zusammensetzung nach Anspruch 1, wobei das Wasser im Wesentlichen das einzige flüssige Verdünnungsmittel in der Zusammensetzung ist.

13. Zusammensetzung nach Anspruch 1, wobei das Wasser in einem Bereich von etwa 50 bis etwa 99,5 Gewichtsprozent vorliegt.

14. Verfahren zur Herstellung der wässrigen Zusammensetzung nach Anspruch 1, umfassend: Mischen des hydrophilen Wirkstoffs mit dem Block-Copolymer in einem wässrigen Verdünnungsmittel.

## Revendications

1. Composition qui comprend :
- de l'eau en tant que diluant liquide, en une proportion pondérale de plus de 50%;
- un ingrédient actif hydrophile, lequel ingrédient actif hydrophile est un composant doté d'une activité d'agent de soin personnel, d'agent pharmaceutique, d'agent apparenté aux détergents, d'agent de nettoyage, d'agent agricole, d'indicateur ou de catalyseur ;
- et un copolymère dibloc, comportant un seul bloc d'oxyde d'éthylène polymérisé et un seul bloc d'oxyde de butylène polymérisé ;
et dans laquelle une fraction de 30 à 95 % de la quantité d'ingrédient actif hydrophile présente dans la composition aqueuse se trouve encapsulée dans le copolymère dibloc.

2. Composition conforme à la revendication 1, dans laquelle le copolymère dibloc comporte 10 à 12 motifs d'oxyde d'éthylène polymérisé et 10 à 12 motifs d'oxyde de butylène polymérisé.

3. Composition conforme à la revendication 1, qui comprend en outre au moins l'un d'un propylèneglycol et d'une huile minérale, ajouté après que l'ingrédient actif et le copolymère à blocs ont été combinés.

4. Composition conforme à la revendication 1, dans laquelle l'ingrédient actif hydrophile est une vitamine, un sel ou un acide.

5. Composition conforme à la revendication 1, dans laquelle la solubilité de l'ingrédient actif hydrophile dans l'eau vaut au moins 0,1 gramme dans 100 grammes d'eau distillée, à 25 °C et sous 1 atm.

6. Composition conforme à la revendication 1, dans laquelle la solubilité de l'ingrédient actif hydrophile dans l'eau vaut au moins 2 grammes dans 100 grammes d'eau distillée, à 25 °C et sous 1 atm.

7. Composition conforme à la revendication 1, dans laquelle le rapport pondéral entre l'ingrédient actif hydrophile et le copolymère à blocs vaut d'environ 0,1/1 à environ 1000/1.

8. Composition conforme à la revendication 1, dans laquelle le rapport pondéral entre l'ingrédient actif hydrophile et le copolymère à blocs vaut d'environ 1/1 à environ 100/1.

9. Composition conforme à la revendication 1, laquelle composition contient d'environ 0,5 % à environ 5 % de copolymère à blocs, en poids rapporté au poids total de la composition.

10. Composition conforme à la revendication 1, dans laquelle la masse molaire moyenne en poids du copolymère à blocs vaut moins de 2000.

11. Composition conforme à la revendication 1, dans laquelle la masse molaire moyenne en poids du bloc d'oxyde d'éthylène polymérisé vaut de 200 à 900.

12. Composition conforme à la revendication 1, dans laquelle l'eau est pratiquement le seul diluant liquide présent dans la composition.

13. Composition conforme à la revendication 1, dans laquelle l'eau se trouve en une proportion pondérale d'environ 50 % à environ 99,5 %.

14. Procédé de préparation d'une composition aqueuse conforme à la revendication 1, qui comporte le fait de mélanger l'ingrédient actif hydrophile et le copolymère à blocs, au sein d'un diluant aqueux.
